# EUROPÄISCHE PATENTSCHRIFT

(11) **EP 3 986 181 B1**
(45) Veröffentlichungstag und Bekanntmachung des Hinweises auf die Patenterteilung: **31.07.2024**
(21) Anmeldenummer: 20733417.8
(22) Anmeldetag: 16.06.2020
(51) Int. Cl.: A24F 40/70, A24F 40/42, A24F 40/10, B29C 45/14, B67C 3/02

(54) **VERFAHREN UND MONTAGESKELETT ZUR HERSTELLUNG EINER VERDAMPFERBAUGRUPPE FÜR EINEN INHALATOR**
METHOD AND MOUNTING FRAME FOR MANUFACTURING A VAPORIZER UNIT FOR AN INHALER
PROCÉDÉ ET OSSATURE DE MONTAGE POUR FABRIQUER UN MODULE ÉVAPORATEUR POUR UN INHALATEUR

(30) Priorität: 18.06.2019 DE 102019116450
(43) Veröffentlichungstag der Anmeldung: 27.04.2022
(73) Patentinhaber: Körber Technologies GmbH, 21033 Hamburg (DE)
(72) Erfinder: ROMMING, Niklas, 22085 Hamburg (DE); CORNILS, Lasse, 22605 Hamburg (DE); JAKLIN, Jan, 70736 Fellbach (DE); MÜLLER, Thomas, 20259 Hamburg (DE)
(74) Vertreter: Müller Verweyen
(86) Internationale Anmeldenummer: PCT/EP2020/066601
(87) Internationale Veröffentlichungsnummer: WO 2020/254307

(56) Entgegenhaltungen:
- WO-A1-2016/049910
- WO-A1-2016/127361
- CN-A- 109 247 624
- DE-U1- 202018 102 268
- US-A1- 2015 289 565
- US-A1- 2018 303 168

## Beschreibung

Die vorliegende Erfindung betrifft ein Verfahren zur Herstellung einer Verdampferbaugruppe für einen Inhalator, vorzugsweise eine elektronische Zigarette.

Die EP 3 025 601 B1 offenbart ein Verfahren zur Herstellung einer Verdampferkartusche für eine elektronische Zigarette, bei dem Elektroden für die Anschlüsse eines elektrischen Heizers fortlaufend aus einem Blechstreifen gestanzt werden.

Die JPS 61214544 offenbart die elektrische Anbindung eines Halbleiterelements an ein Stanzgitter, wobei das Halbleiterelement gekapselt und vereinzelt wird.

Die US 2015/0289565 A1, WO 2016/127361 A1 und CN 109 247 624 A offenbaren jeweils ein Verfahren nach dem Oberbegriff von Anspruch 1.

Ein weiteres Verfahren zur Herstellung einer Verdampferbaugruppe ist in US2018/0303168A1 gezeigt.

Die Aufgabe der Erfindung besteht darin, eine effektive Serienfertigungsmöglichkeit für Verdampferbaugruppen bereitzustellen, wobei der Verdampfer elektrisch zuverlässig angebunden und thermisch möglichst entkoppelt werden soll.

Die Erfindung löst diese Aufgabe mit den Merkmalen der unabhängigen Patentansprüche 1 (Verfahren) und 9 (Montageskelett).

Erfindungsgemäß wird eine Mehrzahl von Anbindungsplätzen bereitgestellt und an jedem Anbindungsplatz mindestens ein Montageschritt, vorzugsweise eine Mehrzahl von Montageschritten durchgeführt, um an jedem Anbindungsplatz jeweils eine Verdampferbaugruppe herzustellen.

Erfindungsgemäß sind die Anbindungsplätze durch ein Montageskelett miteinander verbunden. Das Montageskelett ist bandförmig und auf-/abrollbar und vorteilhaft metallisch. Mittels des Montageskeletts kann somit bandförmig fortlaufend aneinander gereiht eine Vielzahl von Anbindungsplätzen für Verdampfer zur maschinellen Verarbeitung bereitgestellt werden.

Zur elektrischen Anbindung des Verdampfers wird vorteilhaft mindestens eine elektrisch leitende Anbindungsfläche (Bondfläche), beispielsweise aus Gold, an jedem Anbindungsplatz bereitgestellt.

Das Montageverfahren umfassend vorteilhaft einen Montageschritt des Anbindens eines Verdampferträgers an den oder jeden Anbindungsplatz. Dies kann besonders vorteilhaft durch Umspritzen des Montageskeletts mit einem Kunststoff geschehen. Des Weiteren ist vorteilhaft ein Montageschritt des Anbindens eines Verdampfers an den oder jeden Anbindungsplatz vorgesehen, insbesondere mittels eines Klebestoffs.

Dier elektrische Anbindung jedes Verdampfers erfolgt dann vorteilhaft durch elektrische Verbindung und/oder Verdrahtung mit der oder jeder elektrisch leitenden Anbindungsfläche.

Vorteilhaft umfasst das Montageverfahren einen oder mehrere aus der Gruppe folgender Montageschritte: Platzieren und/oder Anbinden eines Dochtelements in oder an der Verdampferbaugruppe; Einbringen von mindestens einem Dichtelement zur Flüssigkeitsdichtung in die oder jede Verdampferbaugruppe; Platzieren und/oder Anbinden eines Kennelements in oder an der Verdampferbaugruppe; Umhüllung der oder jeder Verdampferbaugruppe mit einem Verdampfergehäuse; Verbindung eines Schlots mit einer Schlotaufnahme der oder jeder Verdampferbaugruppe; Montage und/oder Befüllung eines Flüssigkeitstanks an der oder jeder Verdampferbaugruppe.

Zu einem geeigneten Zeitpunkt des Montageverfahrens kann ein teilweises Vereinzeln der mindestens teilweise montierten Verdampferbaugruppe, insbesondere durch einseitiges Abtrennen von dem Montageskelett erfolgen. Danach kann ein vorgefertigtes Verdampfergehäuse beispielsweise auf das freie Ende der Verdampferbaugruppe aufgeschoben werden. Es ist aber auch möglich, das Verdampfergehäuse am Anbindungsplatz durch Spritzguss zu erzeugen.

Abschließend erfolgt ein vollständiges Vereinzeln der Verdampferbaugruppe durch vollständiges Abtrennen von dem Montageskelett, um je nach Ausführungsform Verdampferbaugruppen, Verdampfereinheiten oder Verdampferkartuschen zu erhalten.

Das erfindungsgemäße Montageskelett ist bandförmig, wird vorzugsweise im Wesentlichen endlos bereitgestellt und zur Durchführung von Montageschritten, vorzugsweise arbeitsgetaktet, vorgeschoben. In einer vorteilhaften Ausführungsform umfasst das Montageskelett mindestens einen, vorteilhaft mehrere, sich in einer Vorschubrichtung erstreckende Längsstege, wobei die Anbindungsplätze vorteilhaft in einer oder mehreren Reihen parallel zu den Längsstegen angeordnet sind. An oder in mindestens einem Längssteg sind bevorzugt in regelmäßigen Abständen Führungselemente oder - öffnungen vorgesehen.

Weiter vorteilhaft weist das Montageskelett an jedem Anbindungsplatz mindestens einen Quersteg auf, der sich ausgehend von mindestens einem Längssteg quer erstreckt. In einer bevorzugten Ausführungsform verbleibt mindestens ein Teil des mindestens einen Querstegs dauerhaft in der Verdampferbaugruppe und bildet im Endprodukt vorteilhaft mindestens einen elektrischen Anschluss zur elektrischen Kontaktierung des Verdampfers.

Die Erfindung wird im Folgenden anhand bevorzugter Ausführungsformen unter Bezugnahme auf die beigefügten Figuren erläutert. Dabei zeigt
- Fig. 1: eine perspektivische Ansicht von oben eines Montageskeletts;
- Fig. 2: eine perspektivische Ansicht von oben eines Montageskeletts mit an den Anbindungsplätzen angebundenen Verdampferträgern;
- Fig. 3: eine perspektivische Ansicht von oben eines Montageskeletts mit an den Anbindungsplätzen angebundenen Verdampfern;
- Fig. 4: eine schematische Ansicht einer Druckvorrichtung zum Auftragen von Klebstoff auf Verdampferträger;
- Fig. 5: einen Querschnitt durch eine Verdampferbaugruppe;
- Fig. 6: eine perspektivische Ansicht von oben eines Montageskeletts mit elektrisch angebundenen bzw. verdrahteten Verdampfern;
- Fig. 7: eine perspektivische Ansicht von unten eines Montageskeletts mit Kennelement;
- Fig. 8: eine perspektivische Ansicht von oben eines Montageskeletts mit teilweise vereinzelten Verdampferbaugruppen;
- Fig. 9: eine perspektivische Ansicht von unten eines Montageskeletts mit teilweise vereinzelten Verdampferbaugruppen;
- Fig. 10: eine perspektivische Ansicht von oben eines Montageskeletts mit aufgesetztem Verdampfergehäuse zur Bildung einer Verdampfereinheit;
- Fig. 11: eine perspektivische Ansicht von oben eines Montageskeletts mit angesetztem Kartuschengehäuse zur Bildung einer Verdampferkartusche;
- Fig. 12: eine perspektivische Ansicht einer vereinzelten Verdampferkartusche;
- Fig. 13: einen Querschnitt durch eine vereinzelte Verdampferkartusche;
- Fig. 14: einen Querschnitt durch eine vereinzelte Verdampferkartusche in einer anderen Ausführungsform; und
- Fig. 15: eine Ansicht von oben auf ein doppeltbreites Montageskelett.

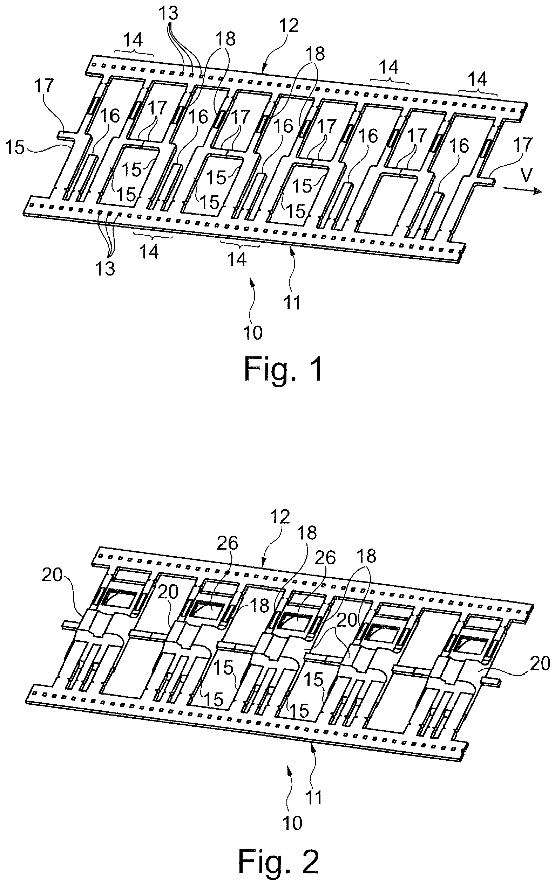

Das insbesondere bandförmige Montageskelett 10 erstreckt sich fortlaufend bzw. quasi endlos entlang einer Längsrichtung V, die bei einer Verarbeitung in einer Herstellungsmaschine einer Vorschubrichtung V entspricht. In Figur 1 ist nur ein Ausschnitt aus einem vollständigen Montageskelett 10 gezeigt. Das Montageskelett 10 ist zur fortlaufenden Verarbeitung in einer oder mehreren Montagemaschinen vorgesehen und eingerichtet; dies wird später im Detail erläutert. Zur Montage wird das Montageskelett 10 in der oder den Montagemaschinen in Vorschubrichtung V vorgeschoben. Das Montageskelett 10 wird vorteilhaft von einer Rolle abgezogen und ist daher vorteilhaft ab- und/oder aufrollbar. Es kann vorteilhaft sein, das Montageskelett 10 nach Beendigung eines Montageschritts (in einer Montagemaschine) wieder aufzurollen und für einen nachfolgenden Montageschritt (ggf. in einer nachfolgenden Montagemaschine) wieder abzurollen, beispielsweise wenn die einzelnen Montageschritte bzw. die einzelnen Montagemaschinen unterschiedlich getaktet sind. Einzelne Bänder können während des Herstellungsverfahrens beispielsweise durch Abstanzen und/oder Anspleißen, etwa mittels Schweißen, auf beliebige Länge verändert werden, um damit einen Endlosprozess zu ermöglichen und/oder die Rollengrö-βe zu verändern.

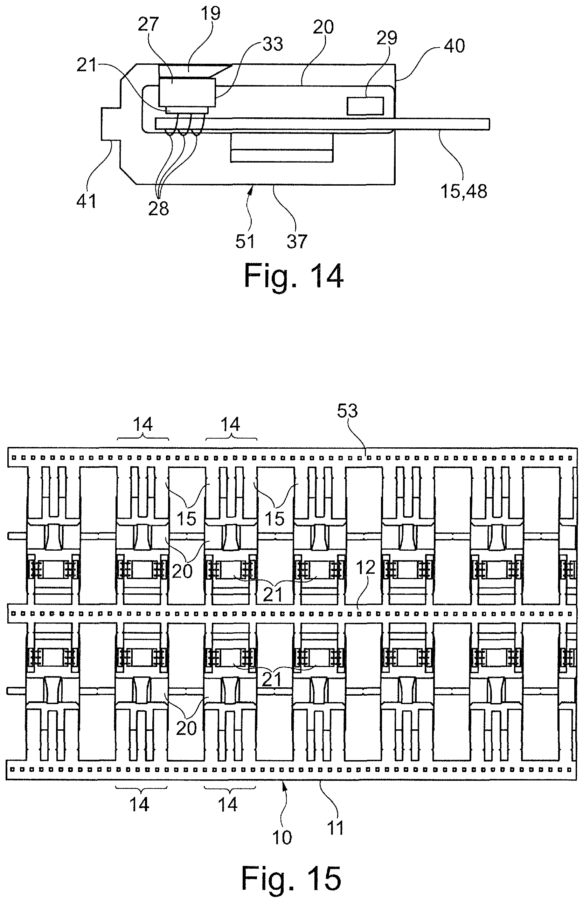

Das Montageskelett 10 weist hier beispielsweise zwei sich in Vorschubrichtung fortlaufend bzw. quasi endlos erstreckende Längsstege 11, 12 auf, die vorteilhaft parallel zueinander angeordnet sind. In anderen Ausführungsformen kann auch lediglich ein Längssteg oder können auch mehr als zwei Längsstege (siehe Figur 15) vorgesehen sein. Der oder die Längsstege 11, 12 dienen zum Transport bzw. zum Vorschieben des Montageskeletts 10 in der Maschine, und können zu diesem Zweck in regelmäßigen Abständen entlang der Längsrichtung V Führungselemente oder, wie hier, Führungsöffnungen 13 aufweisen, in die beispielsweise entsprechende Führungsteile der Maschine eingreifen.

Entlang der Längs- oder Vorschubrichtung des Montageskelett 10 sind in regelmäßigen Abständen und fortlaufend Anbindungsplätze 14 gebildet. In Figur 1 sind beispielsweise fünf Anbindungsplätze 14 gezeigt. Jeder Anbindungsplatz 14 dient zur Fertigung einer entsprechenden Verdampferbaugruppe für jeweils einen Inhalator. Jeder Anbindungsplatz 14 ist vorteilhaft durch einen oder mehrere Querstege 15, 16 gebildet, die sich quer zur den Längsstegen 11, 12 erstrecken. Das Montageskelett 10 umfasst vorteilhaft durchgehende Querstege 15, die sich von einem Längssteg 11 zu dem anderen Längssteg 12 erstrecken und somit das Montageskelett 10 zusammenhalten. Pro Anbindungsplatz 14 ist vorteilhaft mindestens ein Quersteg 15, weiter vorteilhaft mehrere Querstege 15, beispielsweise zwei durchgehende Querstege 15 vorgesehen.

Des Weiteren kann pro Anbindungsplatz 14 mindestens ein Quersteg 16 vorgesehen sein, der sich ausgehend von lediglich einem Längssteg 11 nicht durchgehend, d.h. nicht bis zu dem anderen Längssteg 12 erstreckt.

An dem oder jedem durchgehenden Quersteg 15 können Abstandshalter 17 vorgesehen sein, die sich vorteilhaft in der Längsrichtung V zwischen jeweils zwei Anbindungsplätzen 14 erstrecken und den Abstand zwischen den entsprechenden Anbindungsplätzen 14 definieren und/oder halten.

Das Montageskelett 10 besteht vorteilhaft aus einem leitenden Material, insbesondere einem Metall, und ist vorteilhaft in Hinsicht auf die Verarbeitbarkeit biegbar. In einer vorteilhaften Ausführungsform ist das Montageskelett 10 aus einem Blech gefertigt und beispielsweise aus einem Blech gestanzt und bildet dann ein Stanzgitter. Nichtmetallische Materialien, bspw. Kunststoff, der ggf. leitend bzw. metallisch beschichtet sein kann, sind für das Montageskelett 10 möglich.

Im Folgenden wird die Herstellung von Verdampferbaugruppen 50 anhand der Figuren 2 bis 14 erläutert.

In einem vorgelagerten Schritt wird das Montageskelett 10 beispielsweise durch Walzen hergestellt. Anschließend wird das zu Montageskelett 10 in eine maschinell zu verarbeitende Form (siehe Figur 1) gebracht, beispielsweise durch Stanzen.

Danach kann optional eine mindestens teilweise Oberflächenveredelung bzw. Galvanisierung des Montageskeletts 10 mittels Materialauftrag, Prägen und/oder Polieren erfolgen. Beispielsweise kann das gestanzte Montageskelett 10 mit Kunststoff umspritzt werden und der Kunststoff dann als Maske für eine nachgelagerte Vergoldung mittels Galvanisierung dienen.

In einem Montageschritt gemäß Figur 2 wird ausgehend von dem Montageskelett 10 ein Verdampferträger 20 an jeden Anbindungsplatz 14 angebunden. Der Verdampferträger 20 kann vorteilhaft aus einem geeigneten Kunststoff, beispielsweise PEEK, bestehen und vorteilhaft bis 300 °C ausgasungsfest sein. Zur Herstellung des Verdampferträgers 20 kann beispielsweise das Montageskelett 10, insbesondere einer oder mehrere Querstege 15, 16 an dem entsprechenden Anbindungsplatz 14 umspritzt werden. Zu diesem Zweck wird ein Montageskelett 10 (siehe Fig. 1) beispielsweise von einer Rolle abgezogen und durch ein nicht gezeigtes Mehrfach-Spritzgusswerkzeug geführt. In dem Montageskelett 10, insbesondere in mindestens einem Quersteg 15, kann mindestens eine elektrische Anbindungsfläche 18, beispielsweise aus Gold, vorgesehen sein.

Nach dem Umspritzen des Montageskeletts 10 an einem Anbindungsplatz 14 wird das Montageskelett 10 in Längsrichtung V weitergeführt. Nach Verlassen des Spritzgusswerkzeugs wird das in Figur 2 gezeigte Montageskelett 10 mit angebundenen Verdampferträgern 20 entweder auf eine Rolle aufgerollt, oder in-line weiterverarbeitet. In letzterem Fall ist vorteilhaft ein Puffer zur Zwischenspeicherung des in Figur 2 gezeigte Montageskeletts 10 vorgesehen, da die Verarbeitungsgeschwindigkeiten des Spritzgusswerkzeug und nachfolgender Verarbeitungsvorrichtungen sich im allgemeinen unterscheiden können.

Andere Verfahren sind möglich, beispielsweise kann der Verdampferträger 20 etwa durch Spritzguss vorgefertigt und in das Montageskelett 10 an dem entsprechenden Anbindungsplatz 14 eingeclipst werden. Der Verdampferträger 20 kann auch aus anderem Material bestehen, beispielsweise aus Keramik oder einem Verbundmaterial.

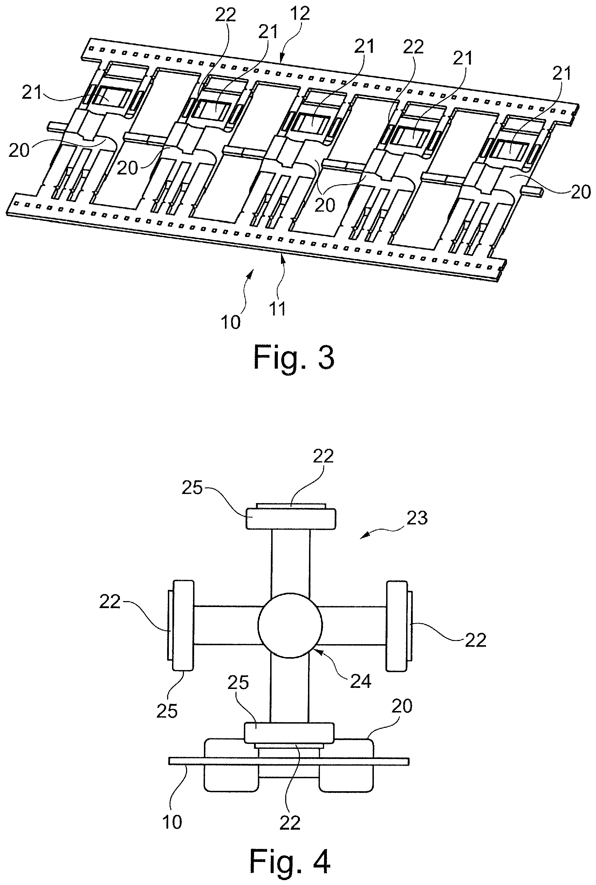

In einem nachfolgenden Montageschritt gemäß Figur 3 wird an jedem Anbindungsplatz 14 ein Verdampfer 21 platziert, beispielsweise in eine Vertiefung des Verdampferträgers 20 (siehe Figur 2), und an den Verdampferträger 20 angebunden. Zu diesem Zweck wird ein mit Verdampferträgern 20 bestücktes Montageskelett 10 (siehe Figur 2) beispielsweise von einer Rolle abgezogen und durch ein nicht gezeigtes Platzier- und Verbindungswerkzeug geführt. Alternativ kann dieser Montageschritt auch im Batch-Betrieb (Chargen-Betrieb) erfolgen.

Die Anbindung des Verdampfers 21 an den Verdampferträger 20 kann beispielsweise mittels eines Klebstoffs 22 geschehen. Der Klebstoff 22 kann in einer Ausführungsform in-line, d.h. im Fertigungsprozess, mittels einer Applikationsvorrichtung 23, auf den Verdampferträger 20 appliziert werden. Die Applikationsvorrichtung 23 kann beispielsweise einen radförmigen Druckkopf 24 mit einer Mehrzahl von beispielsweise vier Druckstempeln 25 für Tampondruck aufweisen, siehe Figur 4. Andere Klebstoff-Applikationsvorrichtungen sind möglich. Der Klebstoff 22 ist vorteilhaft bis mindestens 300 °C temperaturfest und ausgasungsfest gegen toxische Ausdünstungen, sowie beständig gegenüber der Verdampfungsflüssigkeit.

Der Klebstoff 22 kann auf den Verdampferträger 20 aufgetragen werden (wie in Figur 4), bevor der Verdampfer 21 über den Klebstoff 22 mit dem Verdampferträger 20 verbunden wird. Alternativ kann der Klebstoff 22 auf den Verdampfer 21 aufgetragen werden, bevor dieser über den Klebstoff 22 mit dem Verdampferträger 20 verbunden wird. Es ist auch vorteilhaft möglich, zunächst den Verdampfer 21 an dem Verdampferträger 20 zu platzieren und anschließend den Klebstoff 22, beispielsweise in flüssiger Form, zu dispensieren. Der Klebstoff 22 kann an einer Stirnseite und/oder an einer Außenseite des Verdampfers 21 angeordnet sein.

In einem nachfolgenden Schritt wird der Klebstoff 22 ausgehärtet. Dies kann durch Trocknen an der Luft oder vorteilhaft durch Wärmezufuhr, insbesondere in einem Ofen geschehen. Alternativ ist auch die Verwendung von UV-härtbarem Klebstoff 22 möglich, der dann mittels UV-Strahlung gehärtet wird. Die Aushärtung kann Chargen-weise (Batch-weise) oder im Durchlaufverfahren, beispielsweise in einem Durchlaufofen, durchgeführt werden.

Nach Verlassen des Platzier- und Verbindungswerkzeugs wird das in Figur 3 gezeigte Montageskelett 10 mit angebundenen Verdampfern 21 entweder auf eine Rolle aufgerollt, oder in-line weiterverarbeitet. In letzterem Fall ist vorteilhaft ein Puffer zur Zwischenspeicherung des in Figur 3 gezeigte Montageskeletts 10 vorgesehen, da die Verarbeitungsgeschwindigkeiten des Platzier- und Verbindungswerkzeugs und nachfolgender Verarbeitungsvorrichtungen sich im allgemeinen unterscheiden können.

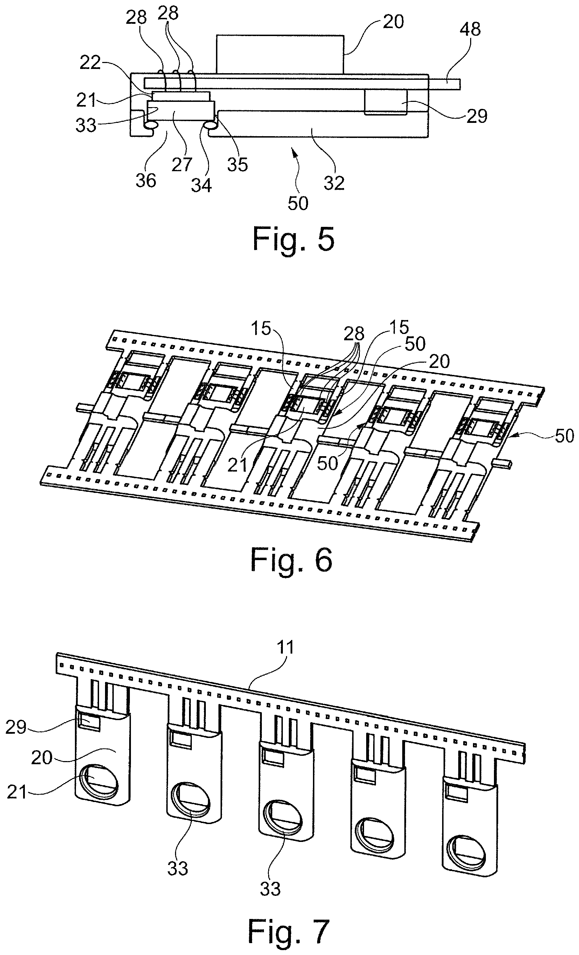

In einer vorteilhaften Ausführungsform wird der Verdampfer 21 rückseitig an den Verdampferträger 20 angebunden. Dies ist am besten aus Figur 5 ersichtlich. Der beispielsweise ringförmige Klebstoff 22 ist demnach an einer Dampfaustrittsseite des Verdampfers 21 angeordnet und wird an eine Rückseite des Verdampferträgers 20 angebunden, d.h. von der Unterseite her in der Ansicht gemäß Figur 3. Diese rückseitige Anordnung des Verdampfers 21 hat den Vorteil, dass eine Kraft zwischen Verdampfer 21 und einem später zu erläuternden Dochtelement 27 die Klebeverbindung des Klebstoffs 22 nicht schwächt und somit geringere Anforderungen an den Klebstoff 22 gestellt werden können.

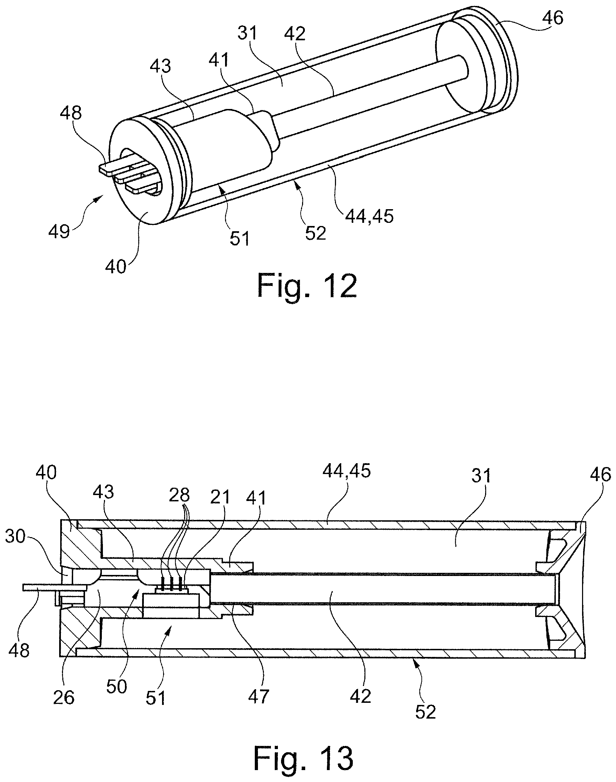

In einem nachfolgenden Montageschritt gemäß Figur 6 wird jeder Verdampfer 21 in einer Verdrahtungsvorrichtung mittels elektrischer Leitungen 28 elektrisch angebunden bzw. verdrahtet (wire-bonding). Zu diesem Zweck wird ein mit Verdampfern 21 bestücktes Montageskelett 10 (siehe Figur 3) beispielsweise von einer Rolle abgezogen und kontinuierlich durch eine nicht gezeigte Verdrahtungsvorrichtung geführt. Die elektrische Anbindung kann alternativ auch chargenweise (d.h. im Batch-Betrieb) erfolgen. Die elektrische Anbindung des Verdampfers 21 erfolgt vorteilhaft in der Weise, dass die beiden elektrischen Anschlüsse des den Verdampfer 21 bildenden Heizwiderstands mittels einer oder mehreren, beispielsweise drei, Leitungen 28 bzw. Anschlussdrähten an jeweils einen Quersteg 15, beispielsweise durch Löten, angebunden werden, wie dies in Figur 6 gezeigt ist. Die Leitungen 28 können beispielsweise aus Gold oder Aluminium bestehen; Stahldraht oder andere geeignete Materialien sind jedoch nicht ausgeschlossen. Teile der Querstege 15 verbleiben dauerhaft in der Verdampferbaugruppe 50 und bilden im Endprodukt die elektrischen Anschlüsse 48 zur Verbindung der Verdampferbaugruppe 50 mit einem Basisteil eines Inhalators, siehe Figuren 12 und 13. Wie aus Figur 13 ersichtlich, sind die elektrischen Leitungen 28 vorteilhaft für eine effiziente Kühlung in einem sich durch das Verdampfergehäuse 51 zwischen der Schlotöffnung 47 und einer entgegengesetzten stirnseitige Öffnung 30 in dem Flansch 40 erstreckenden Luftkanal 26 angeordnet. Durch die stirnseitige Öffnung 30 sind vorteilhaft die elektrischen Anschlüsse 48 zur Verbindung der Verdampferkartusche 52 mit einem Basisteil eines Inhalators durch den Flansch 40 nach außen geführt.

In einem optionalen Schritt gemäß Figur 7 kann ein Kennelement 29 (ID-Chip) in jede Verdampferbaugruppe 50 bzw. in jeden Verdampferträger 20 eingebracht werden. Das Kennelement 29 dient zur eindeutigen Kennung des entsprechenden Verdampfers 21 und kann beispielsweise ein RFID-Element, ein NFC-Element oder ein digitaler Speicherbaustein (etwa ein EEPROM) sein, in dem eine digitale Kennung gespeichert ist. Sofern das Kennelement 29 elektrisch angebunden wird, kann dies vorteilhaft mittels Verdrahtung in der zuvor erwähnten Verdrahtungsvorrichtung geschehen. Die Platzierung und Anbringung des Kennelements 29 kann im Montageschritt gemäß Figur 3, in einem früheren Montageschritt, oder in einem späteren Montageschritt geschehen.

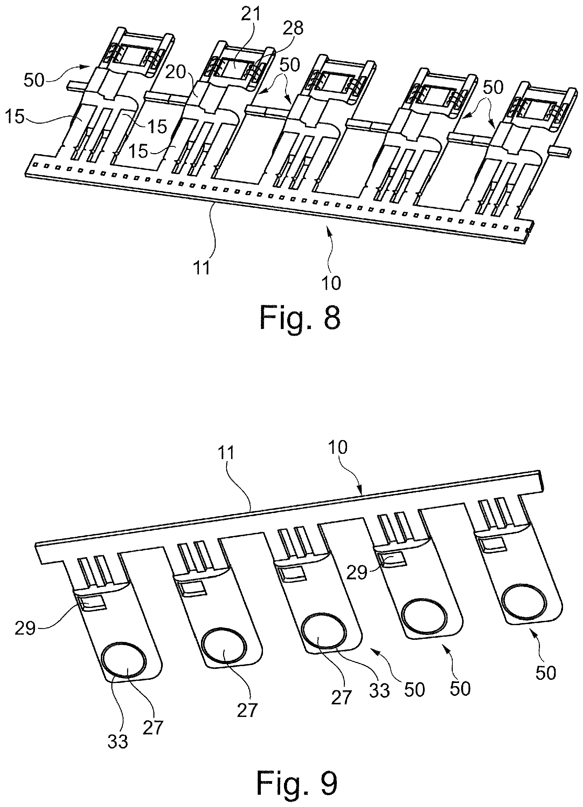

Zu einem geeigneten Zeitpunkt im Montageprozess kann optional eine teilweise Vereinzelung der Verdampferbaugruppen 50 gemäß Figur 8 durchgeführt werden. Das bedeutet im vorliegenden Ausführungsbeispiel, in dem die Verdampferbaugruppen beidseitig gehalten sind, dass einer der Längsstege 12 von dem Montageskelett 10 entfernt wird und die Verdampferbaugruppen 50 nur noch einseitig an dem verbleibenden Längssteg 11 gehalten sind. Die Vereinzelung kann beispielsweise durch Stanzen geschehen. Das Montageskelett 10 bzw. die Querstege 15 können entsprechende Sollbruchstellen aufweisen. Bei der Teilvereinzelung können auch eventuelle Grate vom Spritzgießen des Verdampferträgers 20 entfernt und die Genauigkeit erhöht werden. In Figur 7 ist bereits das Montagskelett 10 nach der teilweisen Vereinzelung gezeigt.

Vorteilhaft wird in einem weiteren Montageschritt gemäß Figur 9 ein Dochtelement 27 an jeder Verdampferbaugruppe 50 bzw. jedem Verdampferträger 20 platziert und daran angebunden. Das Dochtelement 27 dient im fertigen Produkt zum Transport zu verdampfender Flüssigkeit von einem Flüssigkeitsreservoir 31 (siehe Figur 13) zu dem Verdampfer 21 mittels Kapillarkräften. Dazu liegt das Dochtelement 27 vorteilhaft planar. Zum Platzieren des Dochtelements 27 wird das mit Verdampfer 21 bestückte, ggf. vereinzelte Montageskelett 10 (siehe Figur 3) beispielsweise von einer Rolle abgezogen und kontinuierlich durch eine nicht gezeigte Platziervorrichtung geführt. Die elektrische Anbindung alternativ auch chargenweise (d.h. im Batch-Betrieb) erfolgen.

Das Dochtelement 27 wird vorteilhaft in einer Dochtaufnahme 33 bzw. einem Hohlraum (Kavität) des Verdampferträgers 20 in flüssigkeitsleitender Verbindung zu dem Verdampfer 21 platziert. Zwischen dem Dochtelement 27 und dem Verdampfer 21 kann optional ein Vlies, beispielsweise ein Glasfaser-Vlies, angeordnet werden. Das Dochtelement 27 kann beispielsweise aus Keramik bestehen. Die Fixierung des Dochtelements 27 in der Dochtaufnahme 33 kann beispielsweise über eine Klemmung erfolgen, etwa wenn das Dochtelement 27 ein Übermaß relativ zu der Dochtaufnahme 33 aufweist. Alternativ kann die Fixierung des Dochtelements 27 in der Dochtaufnahme 33 mittels eines Klebstoffs erfolgen, beispielsweise von außen, oder zwischen dem Dochtelement 27 und der Dochtaufnahme 33, oder zwischen dem Dochtelement 27 und dem Verdampfer, wobei in letzterem Falle der Klebstoff sich vorteilhaft beim Aushärten zusammenzieht, so dass das Dochtelement 27 dauerhaft an den Verdampfer gepresst wird. Sofern ein Klebstoff zum Fixieren des Dochtelements 27 in der Dochtaufnahme 33 verwendet wird, wird dieser in einem nachfolgenden Schritt ausgehärtet. Dies kann durch Trocknen an der Luft oder vorteilhaft durch Wärmezufuhr, insbesondere in einem Ofen geschehen. Alternativ ist auch die Verwendung von UV-härtbarem Klebstoff möglich, der dann mittels UV-Strahlung gehärtet wird. Die Aushärtung kann Chargen-weise (Batch-weise) oder im Durchlaufverfahren, beispielsweise in einem Durchlaufofen, durchgeführt werden.

Nach Verlassen der Platziervorrichtung wird das in Figur 9 gezeigte Montageskelett 10 mit platzierten Dochtelementen 27 entweder auf eine Rolle aufgerollt, oder in-line weiterverarbeitet. In letzterem Fall ist vorteilhaft ein Puffer zur Zwischenspeicherung des in Figur 9 gezeigte Montageskeletts 10 vorgesehen.

In der Ausführungsform gemäß Figur 5 ist eine Unterschale 32 an der Unterseite des Verdampferträgers 20 vorgesehen. Die Unterschale 32 kann ein separates Teil sein, das beispielsweise an den Verdampferträger 20 geclipst wird oder auf andere Weise mit dem Verdampferträger 20 verbunden werden kann. Alternativ kann die Unterschale 32 auch integral mit dem Verdampferträger 20 in demselben Spritzgießvorgang hergestellt werden. In Ausführungsformen mit Unterschale 32 kann das Dochtelement 27 mindestens teilweise in der Unterschale 32 angeordnet sein.

Zur Montage wird zunächst das Dochtelement 27 in der Aufnahme 33 des Verdampferträgers 20 platziert. Anschließend kann zur Abdichtung einer Flüssigkeitseinlassöffnung 36 der Unterschale 32 ein elastomeres Dichtelement 34, beispielsweise in Form eines Dichtrings, in einem Hohlraum 35 um die Flüssigkeitseinlassöffnung 36 herum angeordnet werden. Anschließend kann die Baugruppe aus Verdampferträger 20 mit Verdampfer 21 auf der Unterschale 32 platziert werden, beispielsweise durch Absenken oder Umbiegen des Montageskeletts 10. Alternativ kann die Unterschale 32 beispielsweise per Montageroboter an den Verdampferträger 20 angesetzt werden. Im montierten Zustand übt das Dichtelement 34 vorteilhaft eine dauerelastische Kraft auf das Dochtelement 27 gegen den Verdampfer 21 aus.

Das Dochtelement 27 kann im Querschnitt rund sein oder jede andere geeignete Querschnittsform aufweisen. Die Querschnittsform des Dochtelements 27 kann an die Form des Verdampfers 21 angepasst sein. Zur Abdichtung kann die Unterschale 32 an den Verdampferträger 20 angeklebt sein. Das Kennelement 29 kann dabei manipulationssicher eingekapselt werden.

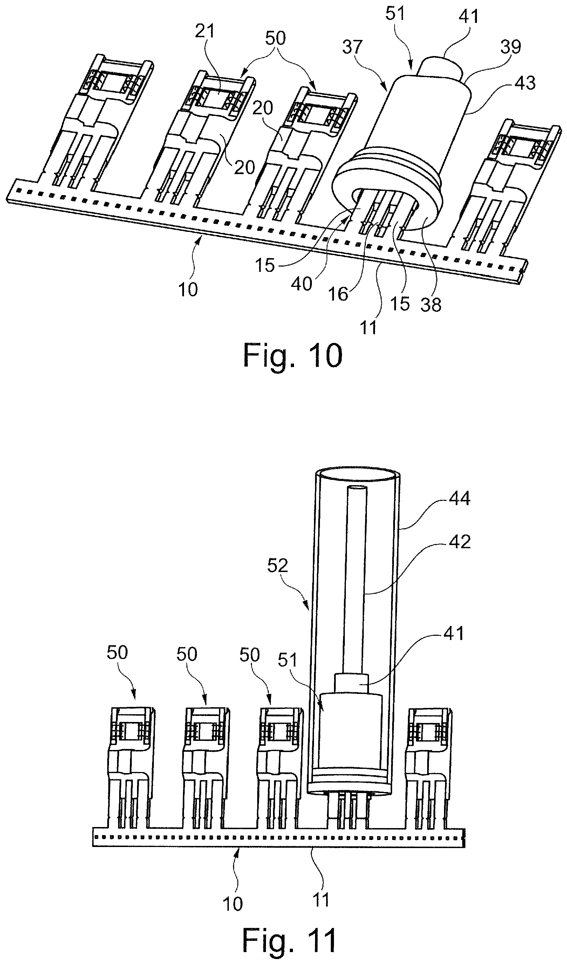

Ein einem nachfolgenden Montageschritt gemäß Figur 10 wird jeweils ein Verdampfergehäuse 37 mit einer Verdampferbaugruppe 50 verbunden, um somit eine Verdampfereinheit 51 zu erhalten. Das Verdampfergehäuse 37 ist vorteilhaft länglich mit zwei Stirnseiten 38, 39 und einer Mantelteil 43, wobei an einer Stirnseite 38 vorteilhaft ein Flansch 40 für eine elektrische Schnittstelle 49 und/oder an einer Stirnseite 29 vorteilhaft eine Schlotaufnahme 41 zur Verbindung mit einem später zu erläuternden Schlot 42 vorgesehen sein kann. Das Verdampfergehäuse 37 kann vorteilhaft aus einem geeigneten Kunststoff, beispielsweise Polypropylen, bestehen.

Zur Montage ist das Verdampfergehäuse 37 vorteilhaft über die Verdampferbaugruppe 50 schiebbar, wie in Figur 10 erkennbar. Im eingeschobenen Zustand ragen die Querstege 15, 16 vorteilhaft nach außen über das Verdampfergehäuse 37 hervor, so dass nach der folgenden Vereinzelung die Querstege 15, 16 die elektrische Schnittstelle für das Basisteil des Inhalators bilden, siehe Figur 12.

Zur Abdichtung des Verdampfergehäuses 37 gegen den Verdampferträger 20 kann beispielsweise ein Klebstoff vor dem Einschieben, insbesondere flächig, auf das Verdampfergehäuse 37 und/oder den Verdampferträger 20 aufgetragen werden. Alternativ kann ein Klebstoff beispielsweise durch die Schlotöffnung 47 in der Schlotaufnahme 41, oder durch eine zusätzliche Öffnung im Flüssigkeitstank 44, lokal in eine im Verdampferträger 20 vorgesehene Nut eingebracht bzw. gepresst werden. Des Weiteren kann eine Dichtnut lokal um das Dochtelement 27 herum vorzugsweise von außen per Wärmebehandlung, beispielsweise mittels Ultraschall- bzw. Thermosonic-Schweißung, verschweißt werden. Die Schweißung kann effizient beispielsweise per Durchstrahlung des Flüssigkeitstanks 44 mittels eines Laserstrahls geschehen. Die Dichtung des Verdampfergehäuses 37 gegen den Verdampferträger 20 stellt sicher, dass Verdampfungsflüssigkeit nur in den Raum um das Dochtelement 27 herum fließen kann. Verdampferseitig wird Dichtigkeit durch Poren des Verdampfers 21 hergestellt.

In einer alternativen Ausführungsform gemäß Figur 14 wird zunächst das Dochtelement 27 in die Dochtaufnahme 33 des Verdampferträgers 20 eingelegt. Das Verdampfergehäuse 37 ist vorteilhaft aus zwei Komponenten gefertigt, insbesondere gespritzt, wobei neben dem eigentlichen Grundkörper des Verdampfergehäuses 37 beispielsweise aus PP in dem Bereich, in dem im montierten Zustand die Dochtaufnahme 33 angeordnet ist, ein Dichtelement 19, beispielsweise aus Flüssig-Silikon oder einem anderen geeigneten elastomeren Material, eingebracht wird. Beim Einschieben der Verdampferbaugruppe 50 in das Verdampfergehäuses 37 wird das elastomere Dichtelement 19 gestaucht, und übt dauerhaft eine Dichtkraft auf das Dochtelement 27 aus.

Alternativ zu der Ausbildung als Zweikomponenten-Verdampfergehäuse 37, 19 kann ein separater Dichtring als Dichtelement 19 vorgesehen sein, der beispielsweise durch das Verdampfergehäuse 37 gequetscht wird.

Das Einschieben der Verdampferbaugruppen 50 in die Verdampfergehäuse 37 kann einzeln, seriell oder Chargen-weise (Batch-weise) geschehen. Im Falle der Serienfertigung wird vorzugsweise eine Mehrzahl von Verdampfergehäusen 37 durch Stege verbunden und in dem den Anbindungsplätzen 12 entsprechenden Abstand beispielsweise durch Spritzgießen hergestellt.

Zur Fertigstellung einer Verdampferkartusche 52 wird ein Schlot 42 mit der entsprechenden Schlotaufnahme 41 der Verdampfereinheit 51 verbunden, beispielsweise in diese eingeschoben, und danach ein Flüssigkeitstank 44 über den Schlot 42 und die Verdampfeinheit 51 geschoben und mit einem stirnseitigen Flansch 40 flüssigkeitsdicht verbunden, beispielsweise durch Verschweißen oder Verkleben. Der Flüssigkeitstank 44 ist vorteilhaft zylinderförmig und umfasst vorzugsweise ein Mantelelement 45 und ein Stirnteil 46 zum Verschließen der der Verdampfereinheit 51 bzw. der verdampferseitigen Schnittstelle 40 entgegengesetzten Stirnseite des Mantelelements 45 und/oder zum Halten des der Verdampfereinheit 51 entgegengesetzten Endes des Schlots 42, siehe Figur 13. Abschließend kann eine Befüllung eines im Inneren des Flüssigkeitstanks 44 gebildeten Flüssigkeitsreservoirs 31 mit einer Verdampfungsflüssigkeit, beispielsweise durch eine Befüllöffnung in dem Kartuschengehäuse 44, stattfinden. Des Weiteren können die elektrischen Kontakte 48, die beispielsweise in einer zentralen Ebene der Verdampferbaugruppe 50 bzw. der Verdampfereinheit 51 liegen können, umgekantet werden, wenn eine planare elektrische Schnittstelle 49 gewünscht ist.

Abschließend folgt ein Schritt des Vereinzelns der Verdampfereinheiten 51 durch Abtrennen von dem Montageskelett 10 bzw. dem oder den Längsstegen 11, wodurch je nach Zeitpunkt der Vereinzelung im Montageprozess einzelne Verdampferbaugruppen 50, einzelne Verdampfereinheiten 51, oder einzelne Verdampferkartuschen 52 wie in den Figuren 12 und 13, erhalten werden.

Die Ausführungsform gemäß Figur 15 verdeutlicht, dass das Montageskelett 10 mehr als zwei, hier beispielsweise drei parallele Längsstege 11, 12, 53 aufweisen kann, wobei der Längssteg 12 mittig und die Längsstege 11, 53 seitlich angeordnet sind. Auf diese Weise sind zwei Bahnen mit jeweils seriell angeordneten Anbindungsplätzen 14 gebildet, es handelt sich also um ein doppeltbreites Montageskelett 10. Im Übrigen befindet sich das Montagskelett 10 gemäß

Figur 15 im gleichen Fertigungszustand wie das Montagskelett 10 gemäß Figur 6 (angespritzter Verdampferträger 20, angebundene und verdrahtete Verdampfer 21), so dass auf weitere Erläuterung der Figur 15 verzichtet werden kann.

Der Verdampfer 21 ist vorteilhaft als mikroelektromechanisches System (MEMS) ausgeführt, beispielsweise mit Leitungs- oder Mikrokanälen, wie in der DE 10 2016 120 803 A1 beschrieben. Dabei handelt es sich vorteilhaft um einen flächigem, mit Mikrokanälen versehenen, ggf. gedopten Silizium-Heizer. Auch bionische oder kapillarartige Heizstrukturen, wie bionische Netze, sind für den Verdampfer 21 möglich. Es sind auch Verdampfer 21 mit Heizstrukturen wie in der DE 10 2017 111 119 A1 beschrieben möglich. Generell ist die Erfindung nicht an einen bestimmten Typ von Verdampfer 21 gebunden.

### Bezugszeichenliste:

- 10: Montageskelett
- 11: Längssteg
- 12: Längssteg
- 13: Führungsöffnung
- 14: Anbindungsplatz
- 15, 16: Querstege
- 17: Abstandshalter
- 18: Anbindungsfläche
- 19: Dichtelement
- 20: Verdampferträger
- 21: Verdampfer
- 22: Klebstoff
- 23: Applikationsvorrichtung
- 24: Druckkopf
- 25: Druckstempel
- 26: Luftkanal
- 27: Dochtelement
- 28: elektrische Leitung
- 29: digitales Kennelement
- 30: stirnseitige Öffnung
- 31: Flüssigkeitsreservoir
- 32: Unterschale
- 33: Dochtaufnahme
- 34: Dichtelement
- 35: Hohlraum
- 36: Flüssigkeitseinlassöffnung
- 37: Verdampfergehäuse
- 38, 39: Stirnseiten
- 40: Flansch
- 41: Schlotaufnahme
- 42: Schlot
- 43: Mantelteil
- 44: Kartuschengehäuse
- 45: Mantelelement
- 46: Stirnteil
- 47: Schlotöffnung
- 48: elektrische Anschlüsse
- 49: elektrische Schnittstelle
- 50: Verdampferbaugruppe
- 51: Verdampfereinheit
- 52: Verdampferkartusche
- 53: Längssteg

## Patentansprüche

1. Verfahren zur Herstellung einer Verdampferbaugruppe (50) für einen Inhalator, umfassend die Bereitstellung einer Mehrzahl von Anbindungsplätzen (14) und Durchführung von mindestens einem Montageschritt an jedem Anbindungsplatz (14), um an jedem Anbindungsplatz (14) jeweils eine Verdampferbaugruppe (50) herzustellen, wobei die Anbindungsplätze (14) durch ein Montageskelett (10) miteinander verbunden sind,
***dadurch gekennzeichnet, dass***
das Montageskelett (10) bandförmig bereitgestellt und zur Durchführung von Montageschritten vorgeschoben wird.

2. Verfahren nach Anspruch 1, umfassend folgenden Montageschritt:
- Anbinden eines Verdampferträgers (20) an den oder jeden Anbindungsplatz (14), insbesondere durch Umspritzen des Montageskeletts (10) mit einem Kunststoff.

3. Verfahren nach einem der vorangehenden Ansprüche, umfassend folgenden Montageschritt:
- Anbinden eines Verdampfers (21) an den oder jeden Anbindungsplatz (14), insbesondere mittels eines Klebestoffs (22).

4. Verfahren nach einem der vorangehenden Ansprüche, umfassend folgenden Montageschritt:
- Bereitstellung mindestens einer elektrisch leitenden Anbindungsfläche (18) an jedem Anbindungsplatz (14).

5. Verfahren nach Anspruch 4, umfassend folgenden Montageschritt:
- elektrische Verbindung und/oder Verdrahtung des Verdampfers (21) mit der oder jeder elektrisch leitenden Anbindungsfläche.

6. Verfahren nach einem der vorangehenden Ansprüche, umfassend folgenden Montageschritt:
- mindestens teilweises Vereinzeln der mindestens teilweise montierten Verdampferbaugruppe (50), insbesondere durch Abtrennen von dem Montageskelett (10).

7. Verfahren nach einem der vorangehenden Ansprüche, umfassend einen oder mehrere aus der Gruppe folgender Montageschritte:
- Platzieren und/oder Anbinden eines Dochtelements (27) in oder an der oder jeder Verdampferbaugruppe (50);
- Einbringen von mindestens einem Dichtelement (19, 34) zur Flüssigkeitsdichtung in die oder jede Verdampferbaugruppe (50);
- Platzieren und/oder Anbinden eines Kennelements (29) in oder an der oder jeder Verdampferbaugruppe (50);
- Umhüllung der oder jeder Verdampferbaugruppe (50) mit einem Verdampfergehäuse (37);
- Verbindung eines Schlots (42) mit einer Schlotaufnahme (41) der oder jeder Verdampferbaugruppe (50);
- Montage und/oder Befüllung eines Flüssigkeitstanks (44) an der oder jeder Verdampferbaugruppe.

8. Verfahren nach einem der vorangehenden Ansprüche, **dadurch gekennzeichnet, dass** das Montageskelett (10) im Wesentlichen endlos bereitgestellt und/oder zur Durchführung von Montageschritten arbeitsgetaktet vorgeschoben wird.

9. Montageskelett (10) zur Verwendung in mindestens einer Montagevorrichtung zur Herstellung einer Verdampferbaugruppe (50) für einen Inhalator, wobei das Montageskelett (10) eine Mehrzahl von durch das Montageskelett (10) miteinander verbunden Anbindungsplätzen (51) zur Herstellung jeweils einer Verdampferbaugruppe (50) aufweist, **dadurch gekennzeichnet, dass** das Montageskelett (10) bandförmig und auf-/abrollbar ist.

10. Montageskelett (10) nach Anspruch 9, **dadurch gekennzeichnet, dass** das Montageskelett (10) metallisch ist.

11. Montageskelett nach Anspruch 9 oder 10, **dadurch gekennzeichnet, dass** das Montageskelett (10) mindestens einen, vorteilhaft mehrere, sich in einer Vorschubrichtung erstreckende Längsstege (11, 12) umfasst, wobei die Anbindungsplätze (14) vorteilhaft in einer oder mehreren Reihen parallel zu den Längsstegen (11, 12) angeordnet sind.

12. Montageskelett nach Anspruch 11, **dadurch gekennzeichnet, dass** an oder in mindestens einem Längssteg (11, 12) in regelmäßigen Abständen Führungselemente oder -öffnungen (13) vorgesehen sind.

13. Montageskelett nach Anspruch nach einem der Ansprüche 9 bis 11, **dadurch gekennzeichnet, dass** das Montageskelett (10) an jedem Anbindungsplatz (14) mindestens einen Quersteg (15, 16) aufweist, der sich ausgehend von mindestens einem Längssteg (11, 12) quer erstreckt.

14. Montageskelett nach Anspruch 13, **dadurch gekennzeichnet, dass** mindestens ein Teil des mindestens einen Querstegs (15,16) dauerhaft an oder in der Verdampferbaugruppe (50) verbleibt und vorteilhaft mindestens einen elektrischen Anschluss (48) zur elektrischen Kontaktierung des Verdampfers (21) bildet.

## Claims

1. Method for manufacturing a vaporizer assembly (50) for an inhaler, comprising providing a plurality of connection stations (14) and performing at least one assembly step at each connection station (14) to manufacture a vaporizer assembly (50) at each connection station (14), wherein the connection stations (14) are interconnected by an assembly framework (10), **characterized in that** the assembly framework (10) is belt-shaped and is advanced to perform assembly steps.

2. Method according to claim 1, comprising the following assembly step:
- connecting a vaporizer support (20) to the or each connection station (14), in particular by overmolding the assembly framework (10) with a plastic material.

3. Method according to any of the preceding claims, comprising the following assembly step:
- bonding a vaporizer (21) to the or each connection station (14), in particular by means of an adhesive (22).

4. Method according to any one of the preceding claims, comprising the following assembly step:
- providing at least one electrically conductive connection surface (18) at each connection station (14).

5. Method according to claim 4, comprising the following assembly step:
- electrically connecting and/or wiring the vaporizer (21) to the or each electrically conductive connection surface.

6. Method according to any one of the preceding claims, comprising the following assembly step:
- at least partially singulating the at least partially assembled vaporizer assembly (50), in particular by separating it from the assembly framework (10).

7. Method according to any of the preceding claims, comprising one or more of the group of following assembly steps:
- placing and/or connecting a wick element (27) in or to the or each vaporizer assembly (50);
- placing at least one sealing element (19, 34) for fluid sealing in or on the or each vaporizer assembly (50);
- placing and/or connecting an identification element (29) in or to the or each vaporizer assembly (50);
- enclosing the or each vaporizer assembly (50) with a vaporizer housing (37);
- connecting a vent (42) to a vent receptacle (41) of the or each vaporizer assembly (50);
- mounting and/or filling a liquid tank (44) to the or each vaporizer assembly.

8. Method according to any one of the preceding claims, **characterized in that** the assembly framework (10) is provided in a substantially endless manner, and is advanced to perform assembly steps in a work-clocked manner.

9. Assembly framework (10) for use in at least one assembly device for manufacturing a vaporizer assembly (50) for an inhaler, wherein the assembly framework (10) comprises a plurality of connection stations (51) connected to each other through the assembly framework (10), each for manufacturing a corresponding vaporizer assembly (50), **characterized in that** the assembly framework (10) is belt-shaped and rollable/unrollable.

10. Assembly framework (10) according to claim 9, **characterized in that** the assembly framework (10) is metallic.

11. Assembly framework according to claim 9 or 10, **characterized in that** the assembly framework (10) comprises at least one, advantageously several, longitudinal webs (11, 12) extending in an advancing direction, wherein the connection stations (14) are advantageously arranged in one or more rows parallel to the longitudinal webs (11, 12).

12. Assembly framework according to claim 11, **characterized in that** guide elements or openings (13) are provided at periodic distances on or in at least one longitudinal web (11, 12).

13. Assembly framework according to any one of claims 9 to 12, **characterized in that** the assembly framework (10) comprises at each connection station (14) at least one transverse web (15, 16) which extends transversely starting from at least one longitudinal web (11, 12).

14. Assembly framework according to claim 13, **characterized in that** at least a part of the at least one transverse web (15, 16) remains permanently on or in the vaporizer assembly (50) and advantageously forms at least one electrical connection (48) for electrical contacting of the vaporizer (21).

## Revendications

1. Procédé de fabrication d'un module évaporateur (50) pour un inhalateur, comprenant la mise à disposition d'une pluralité d'emplacements d'attache (14) et l'exécution d'au moins une étape de montage à chaque emplacement d'attache (14) pour fabriquer un module évaporateur (50) à chaque emplacement d'attache (14), les emplacements d'attache (14) étant reliés entre eux par une ossature de montage (10),
**caractérisé en ce que**
l'ossature de montage (10) est mise à disposition en forme de bande et avancée pour l'exécution des étapes de montage.

2. Procédé selon la revendication 1, comprenant l'étape de montage suivante :
- attache d'un support d'évaporateur (20) à le ou chaque emplacement d'attache (14), en particulier par surmoulage d'une matière plastique sur l'ossature de montage (10).

3. Procédé selon l'une des revendications précédentes, comprenant l'étape de montage suivante :
- attache d'un évaporateur (21) à le ou chaque emplacement d'attache (14), en particulier au moyen d'une substance adhésive (22).

4. Procédé selon l'une des revendications précédentes, comprenant l'étape de montage suivante :
- mise à disposition d'au moins une surface d'attache électriquement conductrice (18) à chaque emplacement d'attache (14).

5. Procédé selon la revendication 4, comprenant l'étape de montage suivante :
- connexion électrique et/ou câblage de l'évaporateur (21) à la ou chaque surface d'attache électriquement conductrice.

6. Procédé selon l'une des revendications précédentes, comprenant l'étape de montage suivante :
- individualisation au moins partielle du module évaporateur (50) au moins partiellement monté, en particulier par séparation de l'ossature de montage (10).

7. Procédé selon l'une des revendications précédentes, comprenant une ou plusieurs des étapes de montage suivantes :
- placement et/ou attache d'un élément formant mèche (27) dans ou sur le ou chaque module évaporateur (50) ;
- introduction d'au moins un élément d'étanchéité (19, 34) pour l'étanchéité aux liquides dans le ou chaque module évaporateur (50) ;
- placement et/ou attache d'un élément d'identification (29) dans ou sur le ou chaque module évaporateur (50) ;
- enveloppement du ou chaque module évaporateur (50) avec un boîtier d'évaporateur (37) ;
- raccordement d'une cheminée (42) à un réceptacle de cheminée (41) du ou chaque module évaporateur (50) ;
- montage et/ou remplissage d'un réservoir de liquide (44) sur le ou chaque module évaporateur.

8. Procédé selon l'une des revendications précédentes, **caractérisé en ce que** l'ossature de montage (10) est mise à disposition essentiellement sans fin et/ou est avancée de manière cadencée pour l'exécution des étapes de montage.

9. Ossature de montage (10) destinée à être utilisée dans au moins un dispositif de montage pour la fabrication d'un module évaporateur (50) pour un inhalateur, l'ossature de montage (10) présentant une pluralité d'emplacements d'attache (51) reliés entre eux par l'ossature de montage (10) pour la fabrication d'un module évaporateur (50) respectif, **caractérisée en ce que** l'ossature de montage (10) est en forme de bande et peut être enroulée/déroulée.

10. Ossature de montage (10) selon la revendication 9, **caractérisée en ce que** l'ossature de montage (10) est métallique.

11. Ossature de montage selon la revendication 9 ou 10, **caractérisée en ce que** l'ossature de montage (10) comprend au moins une, avantageusement plusieurs, entretoises longitudinales (11, 12) s'étendant dans une direction d'avancement, les emplacements d'attache (14) étant avantageusement disposés en une ou plusieurs rangées parallèles aux entretoises longitudinales (11, 12).

12. Ossature de montage selon la revendication 11, **caractérisée en ce que** des éléments ou des ouvertures de guidage (13) sont prévus à intervalles réguliers sur ou dans au moins une entretoise longitudinale (11, 12).

13. Ossature de montage selon l'une des revendications 9 à 11, **caractérisée en ce que** l'ossature de montage (10) présente, à chaque emplacement d'attache (14), au moins une entretoise transversale (15, 16) qui s'étend transversalement à partir d'au moins une entretoise longitudinale (11, 12).

14. Ossature de montage selon la revendication 13, **caractérisée en ce qu'**au moins une partie de ladite au moins une entretoise transversale (15, 16) reste en permanence sur ou dans le module évaporateur (50) et forme avantageusement au moins une connexion électrique (48) pour la mise en contact électrique de l'évaporateur (21).
